# EUROPÄISCHE PATENTSCHRIFT

(11) **EP 3 829 828 B1**
(45) Veröffentlichungstag und Bekanntmachung des Hinweises auf die Patenterteilung: **23.02.2022**
(21) Anmeldenummer: 19750112.5
(22) Anmeldetag: 02.08.2019
(51) Int. Cl.: B63G 7/00, F42B 33/04, F42B 33/06, F42D 5/04, B25J 11/00

(54) **VERFAHREN UND VORRICHTUNG ZUM ENTSCHÄRFEN EINES UNTER WASSER LIEGENDEN BLINDGÄNGERS**
METHOD AND APPARATUS FOR DEACTIVATING UNEXPLODED ORDNANCE LOCATED UNDER WATER
PROCÉDÉ ET DISPOSITIF POUR DÉSAMORCER UNE MUNITION NON EXPLOSÉE QUI SE TROUVE SOUS L'EAU

(30) Priorität: 08.08.2018 DE 102018119339
(43) Veröffentlichungstag der Anmeldung: 09.06.2021
(73) Patentinhaber: Heinrich Hirdes GmbH, 21079 Hamburg (DE)
(72) Erfinder: SCHEFFER, Niels, 21079 Hamburg (DE); FREUDENTHAL, Michael, 21079 Hamburg (DE)
(74) Vertreter: Schmidt, Axel
(86) Internationale Anmeldenummer: PCT/EP2019/070950
(87) Internationale Veröffentlichungsnummer: WO 2020/030558

(56) Entgegenhaltungen:
- DE-A1-102016 115 468
- DE-B3-102013 004 445

## Beschreibung

Die vorliegende Erfindung betrifft eine Vorrichtung und ein Verfahren zum Entschärfen eines unter Wasser liegenden Blindgängers mit mindestens einem Zünder. Im Rahmen der vorliegenden Erfindung wird dabei jedes nicht detonierte und mit einer großen Menge Sprengstoff versehene Kampfmittel, also z.B. Fliegerbomben, Torpedos, Wasserbomben, Grund- oder Ankertau-Minen und ähnliche Kampfmittelaltlasten oder deren explosive Kampfmittelrückstände, als Blindgänger bezeichnet. Derartige Blindgänger verfügen in der Regel über mehr als einen Zünder, so dass bei Darstellung der vorliegenden Erfindung eine Bezugnahme auf einen Zünder stets als Bezugnahme auf mindestens einen Zünder zu verstehen ist.

Es ist bekannt, dass Blindgänger gerade nach langer Lagerung unter Wasser im Boden eines Sees oder auf dem Grund eines Meeres durch Korrosion und unbekannte chemische Umwandlungsprozesse o.ä. eine besondere Herausforderung bei der Entsorgung darstellen. Da eine Vernichtung vor Ort heute insbesondere aus Umwelt- und Naturschutzgründen nur noch in Ausnahmefällen in Betracht kommt, müssen auch derartige Blindgänger für eine nachfolgende Entsorgung geborgen und transportiert werden. Um ein von jedem Blindgänger ausgehendes Gefahrenpotential zu mindern, wird ein Blindgänger nach einer Bergung entschärft.

Aufbauend auf der US 7,363,844 B2, die nach einer Bergung eines Blindgängers unter Wasser ein Verbringen an die Wasseroberfläche ohne Entschärfen lehrt, schlägt die DE 10 2013 004 445 B3 eine Entschärfung durch komplette Zerlegung eines Blindgängers in Form einer Bombe mittels einer Hochdruck-Wasserstrahleinrichtung in einem geschlossenen und entwässerten Gehäuse unter Wasser vor. Dabei wird hier eine in einem Greifer-Werkzeug ergriffene Bombe unmittelbar nach dem Aufnehmen in einem durch das Greifer-Werkzeug selber gebildeten, separierten und nachfolgend entwässerten Raum durch vollständiges Zerschneiden unter Abführung von austretenden Sprengstoff und/oder sonstigen schädlichen Substanzen delaboriert.

Auch gemäß der Lehre der DE 10 2016 115 468 A1 wird ein unter Wasser liegender Blindgänger durch Zerschneiden zerlegt und dann erst zur vollständigen Entsorgung an der Wasseroberfläche geborgen. Für diese Vorgänge wird unter Wasser eine Tauchglocke als schließbares und entwässerbares Gehäuse genutzt, wobei insbesondere auf eine Lage und Position von Zündern des zu beseitigenden Blindgängers besonders geachtet wird.

Es besteht für die vorliegende Erfindung die Aufgabe, ein bekanntes Verfahren und eine entsprechende Vorrichtung hinsichtlich ihrer Effizienz und Betriebssicherheit zu verbessern.

Diese Aufgabe wird erfindungsgemäß durch die Merkmale der unabhängigen Ansprüche gelöst. Demnach umfasst ein erfindungsgemäßes Verfahren unter Nutzung eines unter Wasser schließbaren und entwässerbaren Gehäuses die Schritte Fixierung des Blindgängers innerhalb des Gehäuses, Lokalisieren des mindestens einen Zünders an dem Blindgänger, Losschneiden des mindestens einen Zünders, Entnehmen des losgeschnittenen Zünders und Trennen des entnommenen Zünders von dem restlichen Blindgänger.

Eine erfindungsgemäße Vorrichtung ist mit einem unter Wasser schließbaren und entwässerbaren Gehäuse ebenfalls eine Lösung dieser Aufgabe und umfasst dementsprechend einen Halter zur Aufnahme des Blindgängers mit Lagefixierung innerhalb des Gehäuses, Lokalisierungsmittel zur exakten Bestimmung der Lage des mindestens einen Zünders, Schneidmittel und einen Greifer zum Entnehmen und Trennen des mindestens einen Zünders von dem restlichen Blindgänger. Als Lokalisierungsmittel kommen hierbei bekannte Kamera- und/oder Sensorsysteme, als Schneidmittel z.B. eine Bandsäge oder ein Hochdruck-Wasserstrahlschneidsystem zusammen mit einem marktgängigen Greifer zum Einsatz. Es wird also zum Aufbau einer erfindungsgemäßen Vorrichtung i.d.R. auf erprobte und technisch ausgereifte Komponenten zurückgegriffen.

Gegenüber den vorstehend genannten, bekannten Verfahren wird erfindungsgemäß also ausschließlich eine Entschärfung des Blindgängers vorgenommen, wobei eine zeitaufwändigere, aber vergleichsweise weniger gefährliche komplette Delaborierung des Blindgängers mit einer Absonderung der darin enthaltenen Mengen an Sprengstoff erst später erfolgt. Erfindungsgemäß wird eine Entschärfung des Blindgängers durch Losschneiden und Entnehmen des mindestens einen Zünders jeweils als komplette Munitionsbaugruppe durchgeführt, von dem i.d.R. mindestens einer an einem Blindgänger vorhanden ist. Dabei ist bekannt, dass ein Zünder eines Kampfmittels Sprengstoff in deutlich geringerem Umfang als eine eigentliche Spreng- bzw. Hauptladung enthält. Ein Primärsprengstoff oder eine Übertragungsladung, welche durch den Zünder innerhalb dieser Munitionsbaugruppe gezündet wird, ist aber regelmäßig brisanter und damit in der Handhabung gefährlicher als die eigentliche, mengen- und volumenmäßig viel größere Hauptladung eines Kampfmittels. Während einer Beseitigung des Blindgängers wird es erfindungsgemäß aufgrund des erhöhten Gefahrenpotentials als nicht ausreichend angesehen, auf einen Zünder lediglich besonders zu achten, um dabei z.B. mechanische Einwirkungen auf den Zünder auch in Form von Erschütterungen oder Vibrationen so gering als möglich zu halten. Derartige Einwirkungen entstehen bei einer weitergehenden Zerlegung und/oder einem Ausspülen der Hauptladung aber regelmäßig. Zur deutlichen Erhöhung einer Betriebssicherheit werden daher in einem vergleichsweise schnell durchführbaren Verfahren nur Zünder entnommen und sicher von einem jeweiligen restlichen Blindgänger separiert.

Ein erfindungsgemäßes Verfahren umfasst gegenüber bekannten Verfahren eine geringe Anzahl von Teilschritten, so dass auch eine entsprechende Vorrichtung zu dessen Umsetzung eine reduzierte Anzahl funktionaler Einheiten umfasst. Gegenüber einer nach dem Stand der Technik regelmäßig angestrebten vollständigen Delaboration des Blindgängers wird damit erfindungsgemäß vergleichsweise wenig Prozesszeit beansprucht, so dass eine erfindungsgemäße Vorrichtung auch schneller wieder für eine weitere Entschärfung zur Verfügung stehen kann, als dies bei bekannten Vorrichtung der Fall wäre. Der mindestens eine Zünder wird unter Wasser aus dem Blindgänger entfernt, woran sich vorzugsweise erst über Wasser weitere Schritte der Delaboration mit Unschädlichmachung verbleibender Gefahrenherde des entschärften Blindgängers anschließen. Es verkürzt sich also eine Arbeitszeit, die in der Vorrichtung für eine Aufnahme bis zu einer sicheren Lagerung getrennt weiterzuverarbeitender Teile des betreffenden Blindgängers genötigt wird. Hierdurch wird eine Effizienzsteigerung erreicht. Die Reduktion unterschiedlicher beweglicher Teile innerhalb des entwässerten Gehäuses senkt zudem Ausfallrisiken und eröffnet die Möglichkeit zur Realisierung einer Fail-Safe-Strategie, wie nachfolgend noch zu einem Ausfall der Energieversorgung in einer erfindungsgemäßen Vorrichtung beschrieben. Eine geringe Anzahl beweglicher Teile senkt aber zudem auch den Aufwand einer Reinigung von abrasiven, explosiven oder giftigen Endprodukten der Trennprozesse innerhalb des Gehäuses.

Erfindungsgemäss wird der aus dem Blindgänger entnommene Zünder in eine geschützte Abteilung verbracht und gegenüber dem restlichen Blindgänger separiert. Vorteilhafte Weiterbildungen sind Gegenstand der Unteransprüche.

In dem Fall, dass ein Blindgänger über mehr als einen Zünder verfügt, werden diese zeitlich nacheinander aus dem Blindgänger geschnitten und entnommen sowie in voneinander getrennte Abschnitte der geschützten Abteilung verbracht. In einer Weiterbildung der Erfindung werden mehrere Zünder in voneinander geschützte Abteilungen verbracht, die voneinander getrennt sind. In jedem Fall erfolgt das Separieren eines Zünders von einem restlichen Blindgänger also durch Überführen des Zünders in eine spezielle und gegenüber der restlichen Vorrichtung getrennte Abteilung als Zwischenlager. In dem Gehäuse ist daher eine geschützte Abteilung vorgesehen, die für eine Aufnahme des entnommenen Zünders speziell ausgebildet ist.

Die Abteilung ist erfindungsgemäss durch eine widerstandsfähige Klappe gegenüber einem sonstigen Innenraum der Vorrichtung abtrennbar. Ferner ist die Abteilung druckstabil und gegenüber dem sonstigen Innenraum insbesondere Explosions-geschützt ausgeführt, wobei in diesem sonstigen Innenraum u.a. der restliche Blindgänger lagert.

Gemäß einer wesentlichen Weiterbildung der Erfindung ist diese Abteilung nach Art eines Überdruckventils ausgebildet. Im Fall einer Umsetzung bzw. Explosion des Zünders in der Abteilung kann also ein schlagartig auftretender Überdruck entweichen und in einen Raum außerhalb des Gehäuses abgegeben werden. Das Risiko einer Beschädigung des Gehäuses, wie auch der entsprechend ausgeführten Abteilung ist damit wesentlich gemindert. Besonders vorteilhaft ist eine Weiterbildung der Erfindung, in der die Abteilung eine zweite Klappe aufweist. Durch die zweite Klappe kann im Fall einer Umsetzung des Zünders ein Überdruck außen hin abgegeben werden. Vorzugsweise ist die zweite Klappe der Abteilung aber zum Öffnen für eine Entnahme des Zünders von außen bzw. von außerhalb des Gehäuses her ausgebildet. Der in der Abteilung gelagerte Zünder wird in einer Ausführungsform der Erfindung von außen aus der geschützten Abteilung des Gehäuses entnommen, insbesondere erst nachdem das Gehäuse an eine Wasseroberfläche verbracht worden ist.

Vorzugsweise ist die zweite Klappe gegenüber dem Wasser abgedichtet und wird geschlossen gehalten, insbesondere federelastisch. Die zweite Klappe ist vorzugsweise dazu ausgelegt, durch einen externen Manipulator oder Roboterarm geöffnet zu werden, um den darin gelagerten Zünder sicher aus der Abteilung zu entnehmen.

Neben einer Fokussierung auf eine sichere Entfernung des mindestens einen Zünders zur Entschärfung des Blindgängers unter Wasser in einem nach Art einer Tauchglocke ausgeführten Gehäuse ist die Art und Weise einer Verwahrung des Zünders als eines vergleichsweise brisanten Bauteils ein wesentlicher Punkt der vorliegenden Erfindung. Der Zünder wird separat innerhalb des Gehäuses der Tauch-Kammer und in einer Ausführungsform eines erfindungsgemäßen Verfahrens in einer explosionsgeschützten Abteilung gehalten und verwahrt. Eine Entnahme des Zünders erfolgt erst dann, wenn anschließend auch die Tauch-Kammer geöffnet und auch der Schrott mit teilweise ausgetretenem Sprengstoff entnommen werden kann. An die Entnahme aus der Kammer an einer Wasseroberfläche anschließend kann dieser Zünder in einer separaten Brenn- oder Sprengkammer auf See oder an Land separat vernichtet werden, also unabhängig von der hier beschriebenen Vorrichtung und auch getrennt von einer Delaboration des restlichen Blindgängers.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine geschnittene Seitenansicht eines Ausführungsbeispiels eines schließbaren und entwässerbaren Gehäuses in einer Stellung mit geöffneter Klappe als Halter zur Aufnahme eines Blindgängers mit Lagefixierung;
- Figur 2:: die Darstellung von Figur 1 mit einem auf die eingestellte Aufnahme der Klappe eingelegten Blindgänger;
- Figur 3:: eine geschnittene Seitenansicht gemäß Figur 2 beim Überführen der Klappe zum Schließen des Gehäuses;
- Figur 4:: die Darstellung von Figur 3 mit Andeutung einer Fein-Ausrichtung des Blindgängers auf dem Halter;
- Figur 5a:: die Darstellung von Figur 4 beim Einsatz eines Schneidarms mit einer geschnittenen Ansicht von vorne als Figur 5b;
- Figur 6a:: die Darstellung von Figur 5a bei Entnahme des Zünders mit einer teilweise geschnittenen Ansicht von vorne als Figur 6b;
- Figur 7a:: die Darstellung von Figur 6a beim Reinigen des Zünders mit einer Ansicht von vorne als Figur 7b;
- Figur 8a:: die Darstellung von Figur 7a beim Überführen des Zünders in eine separate Kammer mit einer Ansicht von vorne als Figur 8b;
- Figur 9a:: die Darstellung von Figur 8a nach dem Verschließen der Kammer mit einer Ansicht von vorne als Figur 9b;
- Figur 10:: die Darstellung von Figur 1 mit einem entschärften und zum Anheben an eine Wasseroberfläche gesicherten Blindgänger;
- Figur 11:: eine weitere Ausführungsform einer Abteilung innerhalb des Gehäuses der Vorrichtung und
- Figur 12:: eine perspektivische Ansicht eines weiteren Ausführungsbeispiels in teilweise geschnittener Darstellung.

Über die verschiedenen Abbildungen hinweg werden für gleiche Elemente stets die gleichen Bezugszeichen verwendet. Ohne Beschränkung der Erfindung wird in dem übersichtlichen Ausführungsbeispiel nur ein zylindrischer Blindgänger mit auch nur einem Zünder dargestellt und nachfolgend beschrieben, wie z.B. eine Flieger- oder Wasserbombe oder ein Torpedo. Für Blindgänger mit mehr als einem Zünder oder abweichender geometrischer Form der Außenhülle sind an eine jeweilige Bauform angepasste Halterungen mit einer entsprechenden Justierungs-Einrichtung zur Fein-Ausrichtungen des in der Halterung liegenden Blindgängers und einer entsprechenden Anzahl von Schneidvorgängen zum Abtrennen der Zünder vorzusehen, wie auch eine entsprechende Anzahl von separaten Kammern für jeden einzelnen der Zünder.

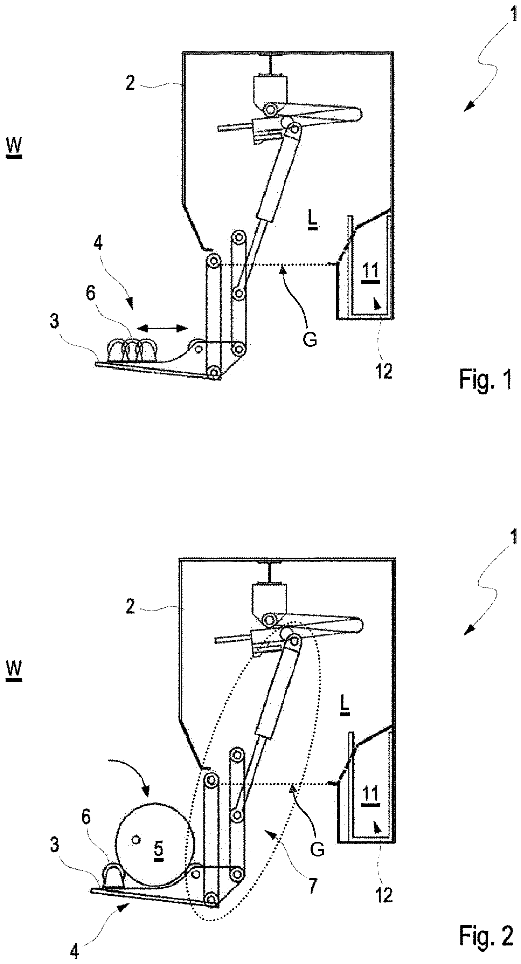

Die Abbildung von Figur 1 zeigt eine geschnittene Seitenansicht eines Ausführungsbeispiels einer Vorrichtung 1 unter Wasser W mit einem schließbaren und entwässerbaren Gehäuse 2, das nach Art einer Taucherglocke ausgeführt ist und dadurch fast vollständig mit Gas oder Luft L gefüllt ist. Eine Grenze G eines mit Luft L gefüllten Innenraums des Gehäuses 2 zu dem umgebenden Wasser W ist als gepunktete Linie angedeutet. Figur 1 stellt die Vorrichtung 1 in einer Stellung mit einer geöffneten Klappe 3 dar, wobei die Klappe 3 eine Halterung 4 trägt, die zur nachfolgenden Aufnahme eines Blindgängers 5 mit einer Fixierung dessen Lage dient. Zur Anpassung auf einen jeweiligen Durchmesser des betreffenden Blindgängers 5 weist die Halterung 4 verschiebliche Rollen 6 auf, wie in Figur 1 durch den Doppelpfeil angedeutet.

Figur 2 stellt aufbauend auf die Abbildung von Figur 1 den Prozessschritt dar, bei dem ein Blindgänger 5 durch einen nicht weiter dargestellten externen Greifer auf die eingestellte Halterung 4 der Klappe 3 eingelegt wurde.

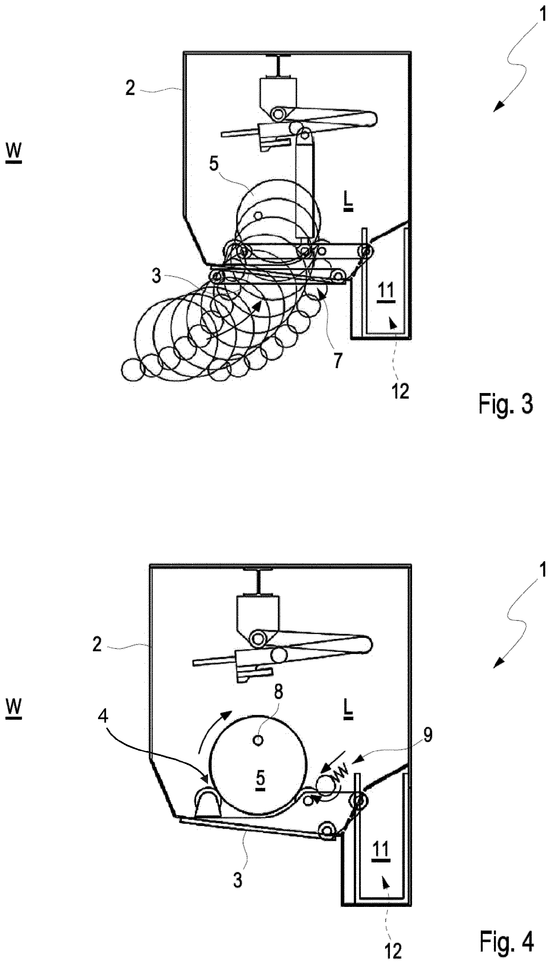

Figur 3 zeigt als Fortführung der geschnittenen Seitenansicht gemäß Figur 2 ein Überführen der Klappe 3 zum Schließen des Gehäuses 2. Die Klappe 3 ist mit dem Gehäuse 2 über einen sog. Sarrus-Mechanismus 7 schwenkbar verbunden, durch den die Klappe 3 gegenüber dem Gehäuse 2 in einer hochpräzisen Bewegung geführt und an Ende geradlinig fest verschlossen wird. Die Klappe 3 bleibt während dieser Bewegung in ihrer Neigung stets unverändert, so dass u.a. ein Herabfallen des Blindgängers 5 aus der Halterung 4 heraus ausgeschlossen ist.

Figur 4 zeigt die Situation nach Abschluss des Schließvorgangs gemäß Figur 3, wobei nun der Sarrus-Mechanismus 7 zwischen der Klappe 3 und dem Gehäuse 2 aus Gründen der Übersichtlichkeit ausgeblendet wurde. Innerhalb des nun geschlossenen Gehäuses 2 erfolgt hier jetzt auf ein Lokalisieren des mindestens einen Zünders 8 an dem Blindgänger 5 durch nicht weiter dargestellte Lokalisierungsmittel in Form von Kameras und Sensoren eine Fein-Einrichtung und Justierung einer Lage oder Position des Blindgängers 5 in der Halterung 4 durch Verschieben und/oder Drehen des Blindgängers 5, um einen Zünder 8 in eine vorbestimmte Position zu bringen. Hierzu wird eine Justierungs-Einrichtung in Form eines Antrieb 9 verwendet, hier als federbelastete Antriebsrolle ausgeführt, der an eine Rolle der Halterung 4 gedrückt wird, um ein Drehen des in der Halterung 4 liegenden Blindgängers 5 zu bewirken.

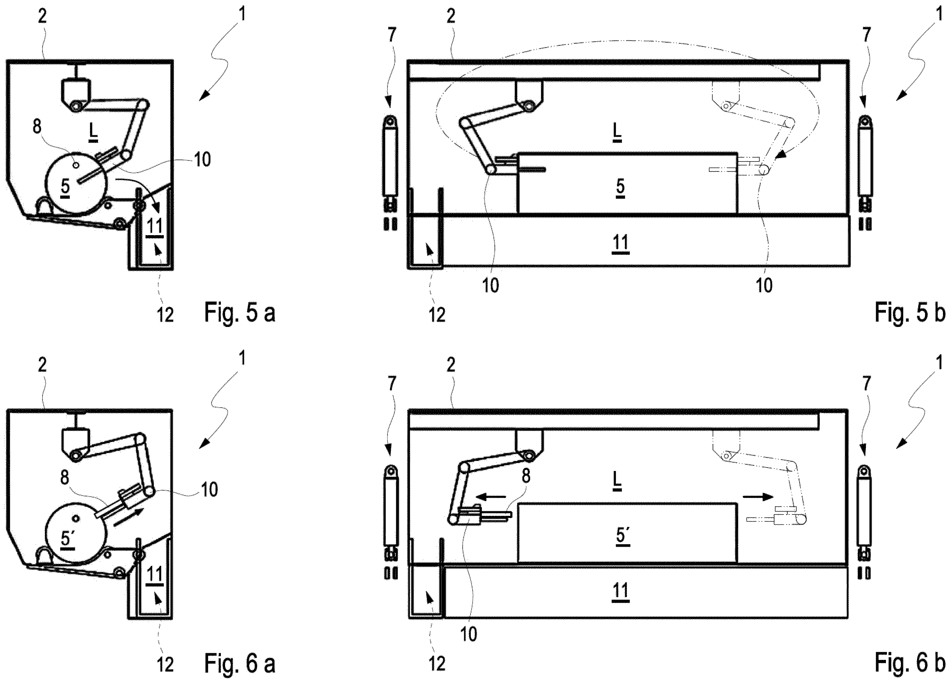

Figur 5a erweitert die Darstellung von Figur 4 um einen im Einsatz befindlichen Manipulator 10 in Form eines Roboter-Schneidarms, der in dem Gehäuse 2 vorgesehen ist. Unter

Anwendung eines Wasserstrahl-Schneidverfahrens mit AbrasivStoffen wird ein Außenmantel des Blindgängers 5 im Bereich des Zünders 8 soweit aufgetrennt, dass der Zünder 8 durch den Manipulator 10 gegriffen und aus dem Blindgänger 5 herausgezogen werden kann. Durch das Herausziehen des Zünders 8 wird der Blindgänger 5 entschärft.

Figur 5b ist eine geschnittene Ansicht des Gehäuses 2 von vorne zur Darstellung einer Verfahrbarkeit des Manipulators 10 auf einer Linearachse in Abhängigkeit von einer jeweiligen endseitigen Position des Zünders 8 an dem Blindgänger 5. In jedem Fall laufen Abwässer des Schneid- und Trennverfahrens mit Abrasivstoffen und Metallspänen, die auch ausgetretenen Strengstoff enthalten können, in ein Auffangbecken 11 ein, das zum fortlaufenden Sammeln von Prozessfluid, Flüssigkeiten und/oder Schlämmen den tiefsten Punkt des Gehäuses 2 bildet.

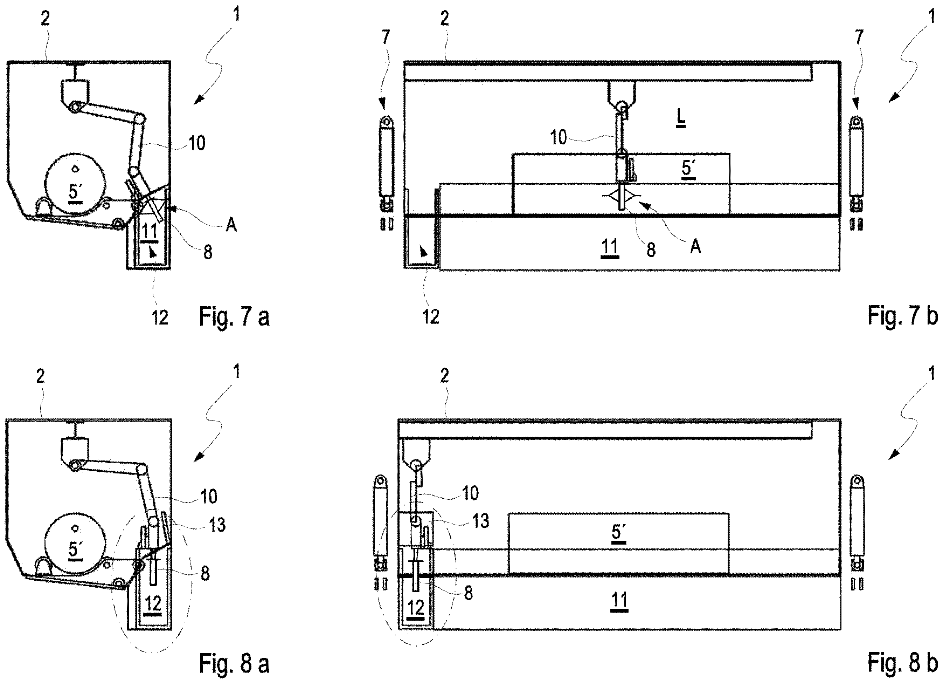

Figuren 6a und 6b sind Darstellungen einer Entnahme des Zünders 8 analog der Figur 5a, 5b. Die Entnahme des Zünders 8 erfolgt nach dessen Lösen von dem Blindgänger 5 durch entsprechendes Aufschneiden des Außenmantels als geradliniges Herausziehen, weil die Zünder 8 i.d.R. einen zylindrischen oder kegelstumpfförmigen Außenaufbau aufweisen. Dem schließt sich gemäß der Darstellung der Figuren 7a, 7b ein Schritt mit einer Reinigung des Zünders 8 von evtl. anhaftendem Sprengstoff durch eine Hochdruck-Abspritzeinheit A an. Das Reinigen wird im Bereich des Auffangbeckens 11 durchgeführt, um eine Verschmutzung eines sonstigen Innenraums des Gehäuses 2 so gering als möglich zu halten und ablaufende Prozessfluide bzw. Spülflüssigkeiten direkt in dem Auffangbecken 11 aufsammeln zu können.

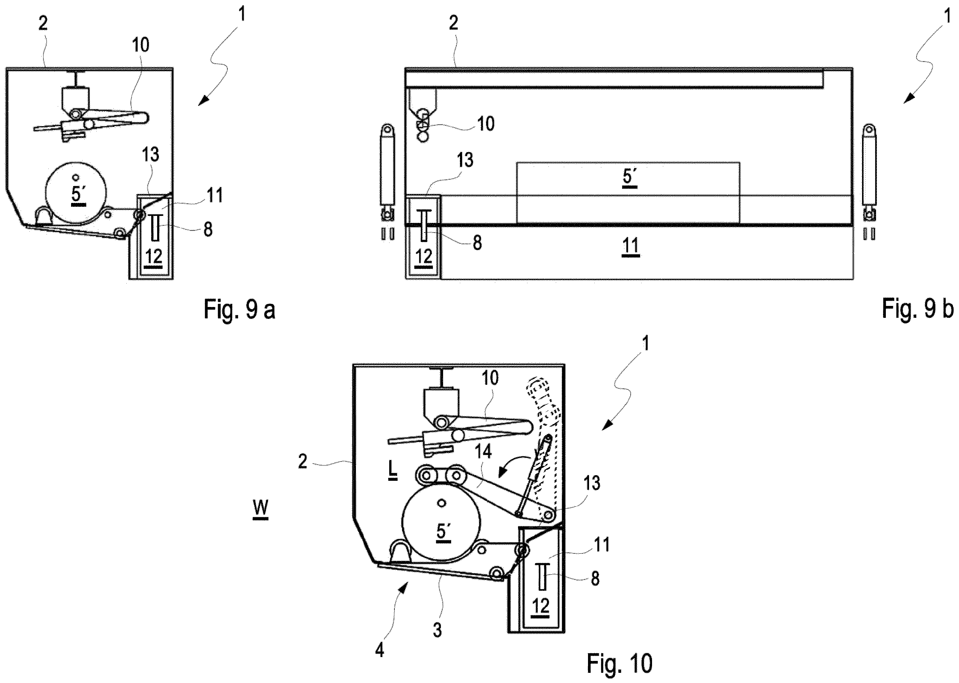

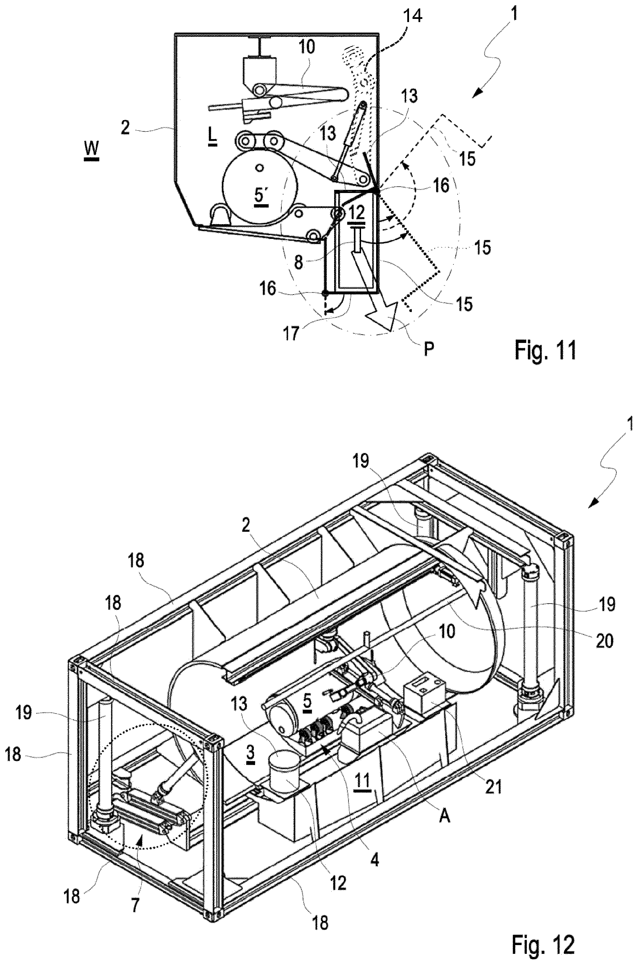

Figur 8a stellt den Schritt eines Überführens des jetzt gesäuberten Zünders 8 durch den Manipulator 10, der dazu ein Werkzeug gewechselt hat, in eine separate, geschützte Abteilung 12 dar. Diese Abteilung 12 liegt in diesem Ausführungsbeispiel fast in der Flucht mit dem Auffangbecken 11 und ist daher erst in der mit einer Ansicht von vorne gemäß Figur 8b korrekt erkennbar. Zum Schutz der gesamten Vorrichtung 1 ist die Abteilung 12 soweit gepanzert ausgeführt, dass eine Explosion des Zünders 8 in der Abteilung 12 keine Zerstörung außerhalb der Abteilung 12 verursachen kann. Dazu ist die Abteilung 12 mit einer widerstandsfähigen und fest verschließbaren Klappe 13 gegenüber dem übrigen Bereich innerhalb des Gehäuses 2 abschließbar, siehe weiter auch Figuren 9a, 9b und 11.

Nachdem der Zünder 8 durch Wasserstrahl-Abrasivschneiden, kurz WAS, innerhalb der entwässerten Kammer des Gehäuses 2 ausgeschnitten und aus dem Blindgänger 5 entfernt und dann in der Kammer 12 sicher verwahrt worden ist, soll eine weitere Verarbeitung mit dem Ziel einer vollständigen Delaboration des Blindgängers 5 an einer Wasseroberfläche erfolgen. Das Anheben kann zu Schwingungen führen, wie auch ein Wellengang an der Wasseroberfläche. Daher wird der entschärfte Blindgänger 5' in einem letzten Verfahrensschritt zum Anheben der Vorrichtung 1 in der Halterung 4 gesichert. Als Sicherung der Lage des entschärften Blindgängers 5' in der Halterung 4 wird ein Hebel 14 auf den entschärften Blindgänger 5' abgesenkt, der dadurch zwischen der Halterung 4 und dem Hebel 14 in seiner Position sicher fixiert ist, wie in Figur 10 dargestellt.

Figur 11 zeigt eine weitere Ausführungsform einer Abteilung 12 innerhalb des Gehäuses 2 der Vorrichtung 1. Grundsätzlich soll ein der Klappe 13 gegenüberliegender Boden der Abteilung 12 ein schwächster Punkt sein, der in dem Fall nachgibt, dass der Zünder 8 aus irgendeinem Grund in der Abteilung 12 explodieren sollte. Damit wird die freigesetzte Explosionsenergie als Überdruck P aus der Abteilung 12 nach unten aus der Vorrichtung 1 abgeleitet. Größere Auswirkungen auf die große entwässerte Kammer des Gehäuses 2 mit dem entschärfter Blindgänger 5' und den vorstehend beschriebenen technischen Einrichtungen darin würde damit vermieden. Ein möglicherweise durch eine Explosion entstehendes Leck befände sich damit am Boden des Gehäuses 2 im Bereich der Abteilung 12 und wäre damit recht unkritisch, da sonstige Bereiche des Gehäuses 2 bei ausreichendem innerem Überdruck von jedem Wassereintritt verschont bleiben können.

Als Alternative hierzu sieht das Ausführungsbeispiel nach Figur 11 eine zweite Klappe 15 an der Abteilung 12 vor. Über ein federbelastetes Gelenk 16 wird die zweite Klappe 15 an der Abteilung 12 wasser- und luftdicht geschlossen gehalten. Während die Klappe 13 von innen durch den Manipulator 10 zu schließen ist, ist die weitere Klappe 15 als Deckel mit einem nicht weiter dargestellten anderen Roboterarm von außen her so zu öffnen, dass der Zünder 8 nach dem Heben der Vorrichtung 1 an der Wasseroberfläche entnommen werden kann.

In einer weiteren Alternative ist die zweite Klappe 15 aus zwei Teilklappen 15, 17 ausgebildet. Ein zweites Teil 17 der zweiten Klappe 15 ist dabei über ein separates federbelastetes Gelenk 16 an dem Gehäuse 2 angelenkt. Im Fall einer Detonation könnte die Abteilung 12 damit so rasch einen explosionsbedingten Überdruck P nach Art eines Überdruckventils nach außen hin ableiten, dass auch die Abteilung 12 nicht beschädigt und eine nachfolgende Leckage vermieden werden würde.

Die Abbildung der Figur 12 zeigt in teilweise geschnittener Darstellung ein weiteres Ausführungsbeispiel, bei dem das Gehäuse 2 nun in ein mechanisches Außengestell 18 mit den Abmaßen eines Standard-Containers mit bekannten Anhebepunkten integriert ist. Das Außengestell 18 trägt als zusätzlichen Schutz der Vorrichtung 1 geschlossene Wände. Zudem weist das Außengestell 18 vier mechanisch höhenverstellbare Füße 19 auf, durch die die Vorrichtung 1 stets sicher und horizontal ausgerichtet auf dem Grund eines Gewässers aufgestellt werden kann.

Ferner weist das Gehäuse 2 in seinem Innenraum neben der Hochdruck-Abspritzeinheit A zum Reinigen eines gerade dem Blindgänger 5 entnommenen Zünders 8 auch eine Rohr-Leiste von Reinigungsdüsen 20 auf, durch die der gesamte Innenraum mitsamt allen Einrichtungen von anhaftenden Sprengstoffresten, Abrasivmaterial, Metallspänen oder sonstigen Verschmutzungen automatisch und zuverlässig gereinigt wird. Auch eine Werkzeugbox 21 mit Wechselwerkzeug für den Manipulator 10, der zwischen Schneidwerkzeugen und Greifern wechseln kann, wird dieser Reinigung direkt unterzogen. Dieser Reinigungsvorgang wird automatisch nach einer Entnahme des Zünders 8 sowie der nachfolgenden Entnahme des entschärften Blindgängers 5' durchgeführt. Dabei werden verbrauchte oder belastete Prozess-Fluide bzw. Abwässer wiederum zentral in dem Auffangbecken 11 als tiefsten Punkt der Vorrichtung 1 gesammelt und von dort aus abgezogen.

Um das Auftreten von Fehlern in der Vorrichtung 1 zu erkennen und die Vorrichtung 1 dann als Ergebnis einer Gefahren- und Bedienbarkeitsuntersuchung in einen vordefinierten, sicheren Zustand zu bringen, ist die Vorrichtung mit redundanten Antrieben und in der Werkzeugbox 21 mit Werkzeugen in mehrfacher Ausführung ausgestattet. Eine extreme Störung tritt jedoch dann ein, wenn eine, in der Zeichnung nicht weiter dargestellte, auch als Nabelschnur bezeichnete Energie- und Datenverbindung der Vorrichtung 1 zu einer nicht weiter dargestellten Versorgungseinheit an der Wasseroberfläche beschädigt oder gar ganz abgetrennt wird. Damit wäre die Vorrichtung 1 nicht mehr überwachbar und/oder nicht mehr aktiv kontrollierbar. Um das Auftreten von den genannten fatalen Fehlern zu erkennen und die Vorrichtung 1 dennoch in einen sicheren Zustand zu bringen, ist ein Antrieb des Sarrus-Mechanismus 7 als Verbindung des Gehäuses 2 mit der Klappe 3 im Sinne eines statischen "Fail-safe" dazu ausgebildet, nach einer eingestellten Wartezeit und damit gerade bei anhaltendem Stromausfall durch Absenken der Klappe 3 an dem Gehäuse 2 eine Notöffnung durchzuführen. Der Antrieb des Sarrus-Mechanismus 7 weist eine Hydraulik auf, die mit Ablauf der Wartezeit durch ein sich langsam öffnendes Ventil an Druck verliert. Unter dem Gewicht des Blindgängers 5 und ggf. bei Unterstützung durch eine spannte Feder geht die Klappe 3 von der geschlossenen in die geöffnete Stellung über. Damit ist eine definierte Position zur sicheren Entnahme des Blindgängers 5 von der Halterung 4 der Klappe 3 durch ein externes Greif- und Transportmittel möglich. Daraufhin kann die Vorrichtung in einem definierten Zustand und ohne den eventuell noch nicht entschärften Blindgänger 5 zur Behebung der Störung an die Wasseroberfläche gehoben werden. Damit muss die beschriebene Vorrichtung 1 im Unterschied zu bekannten Verfahren und Vorrichtungen auch bei einem kompletten Ausfall nicht aufgrund etwaiger unbekannter Sicherheitsrisiken verlorengegeben werden. Eine sichere Entnahme eines noch scharfen Blindgängers 5 oder eine sichere Verwahrung eines Zünders 8 unter definierter sicherer Entnahme des entschärften Blindgängers 5' von der Halterung 4 sind die möglichen Szenarien, die erst in einer erfindungsgemäßen Ausführungsform einer Vorrichtung 1 eine Bergung bei insgesamt vertretbarer Gefährdung des Materials ganz ohne einen gefährdenden Einsatz von Menschen ermöglichen.

### Bezugszeichenliste

- 1: Vorrichtung
- 2: Gehäuse
- 3: Klappe
- 4: Halterung für Blindgänger 5 auf der Klappe 3
- 5: Blindgänger
- 5': restlicher entschärfter Blindgänger ohne Zünder 8
- 6: verschiebliche Rolle
- 7: Sarrus-Mechanismus
- 8: Zünder
- 9: Antrieb einer Rolle 6 der Halterung 4
- 10: Manipulator mit Schneidwerkzeug und Greifer
- 11: Auffangbecken
- 12: geschützte Abteilung
- 13: widerstandsfähige und verschließbare Klappe
- 14: Hebel
- 15: zweite Klappe
- 16: federbelastetes Gelenk
- 17: zweites Teil einer zweiten Klappe 15
- 18: mechanisches Außengestell
- 19: mechanisch höhenverstellbarer Fuß des Außengestells 18
- 20: Rohr-Leiste mit Reinigungsdüsen
- 21: Werkzeugbox für den Manipulator 10

- A: Hochdruck-Abspritzeinheit
- G: Grenze zwischen Luft-gefülltem Innenraum L u. Wasser W
- L: Luft
- P: Explosions-Überdruck in der geschützten Abteilung 12
- W: Wasser

## Patentansprüche

1. Verfahren zum Entschärfen eines unter Wasser liegenden Blindgängers (5) mit mindestens einem Zünder unter Nutzung eines unter Wasser schließbaren und entwässerbaren Gehäuses (2), mit den Schritten:
* Fixieren des Blindgängers (5) in dem Gehäuse (2),
* Lokalisieren des mindestens einen Zünders (8) an dem Blindgänger (5),
* Losschneiden des mindestens einen Zünders (8),
* Entnehmen des losgeschnittenen Zünders (8) aus dem Blindgänger (5),
**gekennzeichnet durch** den weiteren Schritt:
* Trennen des entnommenen Zünders (8) von dem restlichen Blindgänger (5'), indem der aus dem Blindgänger (5) entnommene Zünder (8) in eine geschützte Abteilung (12) verbracht und gegenüber dem restlichen Blindgänger (5') getrennt und räumlich separiert wird.

2. Verfahren nach Anspruch 1, **dadurch gekennzeichnet, dass** in dem Fall, dass ein Blindgänger (5) über mehr als einen Zünder (8) verfügt, diese zeitlich nacheinander aus dem Blindgänger (5) geschnitten und entnommen sowie in voneinander getrennte Abschnitte der geschützten Abteilung (12) verbracht werden.

3. Verfahren nach dem vorhergehenden Anspruch, **dadurch gekennzeichnet, dass** der aus dem Blindgänger (5) entnommene Zünder (8) von außen her aus der geschützten Abteilung (12) des Gehäuses (2) entnommen wird.

4. Verfahren nach einem der beiden vorhergehenden Ansprüche, **dadurch gekennzeichnet, dass** der aus dem Blindgänger (5) entnommene Zünder (8) aus der geschützten Abteilung (12) des Gehäuses (2) erst dann entnommen wird, nachdem das Gehäuse (2) an eine Wasseroberfläche verbracht worden ist.

5. Verfahren nach einem der vorhergehenden Ansprüche,
**dadurch gekennzeichnet, dass** auf ein Lokalisieren des mindestens einen Zünders (8) an dem Blindgänger (5) die Lage oder Position des Blindgängers (5) durch Verschieben und/oder Drehen eingerichtet oder justiert wird.

6. Verfahren nach dem vorhergehenden Anspruch, **dadurch gekennzeichnet, dass** das Justieren unter Verwendung einer Justierungs-Einrichtung in Form eines Antriebs (9) bei in einer Halterung (4) liegendem Blindgänger (5) vorgenommen wird.

7. Vorrichtung (1) zum Entschärfen eines unter Wasser liegenden Blindgängers (5) mit mindestens einem Zünder (8), wobei die Vorrichtung (1) ein unter Wasser schließbares und entwässerbares Gehäuse (2) umfasst,
* eine Halterung (4) zur Aufnahme des Blindgängers (5) mit Lagefixierung in dem Gehäuse (2);
* Lokalisierungsmittel zur exakten Bestimmung der Lage des Zünders (8) an dem Blindgänger (5),
* einen Manipulator (10) mit Schneidmitteln zum Losschneiden des Zünders (8) und
* einen Greifer zum Entnehmen und Trennen des losgeschnittenen Zünders (8) von dem restlichen Blindgänger (5'), **dadurch gekennzeichnet, dass** in dem Gehäuse (2) eine geschützte Abteilung (12) zur Aufnahme des von dem restlichen Blindgänger (5') getrennten Zünders (8) ausgebildet ist, wobei die Abteilung (12) durch eine widerstandsfähige und verschließbare Klappe (13) gegenüber einem sonstigen Innenraum der Vorrichtung (1) abtrennbar und druckstabil ausgeführt ist.

8. Vorrichtung nach dem vorhergehenden Anspruch, **dadurch gekennzeichnet, dass** zur Aufnahme mehrerer Zünder (8) voneinander geschützte Abteilungen (12) vorgesehen sind, die voneinander getrennt sind.

9. Vorrichtung nach einem der beiden vorhergehenden Ansprüche, **dadurch gekennzeichnet, dass** die Abteilung (12) durch die Klappe (13) gegenüber dem sonstigen Innenraum des Gehäuses (2) Explosions-geschützt ausgebildet ist.

10. Vorrichtung nach einem der drei vorhergehenden Ansprüche, **dadurch gekennzeichnet, dass** die geschützte Abteilung (12) nach Art eines Überdruckventils ausgebildet ist.

11. Vorrichtung nach einem der vier vorhergehenden Ansprüche, **dadurch gekennzeichnet, dass** die geschützte Abteilung (12) einen zweiten Deckel aufweist, der als zweite Klappe (15) ausgebildet ist.

12. Vorrichtung nach dem vorhergehenden Anspruch, **dadurch gekennzeichnet, dass** die zweite Klappe (15) über ein federbelastetes Gelenk (16) an der Abteilung (12) wasser- und luftdicht geschlossen gehalten ist.

13. Vorrichtung nach einem der beiden vorhergehenden Ansprüche, **dadurch gekennzeichnet, dass** die zweite Klappe (15, 17) zum Öffnen für eine Entnahme des Zünders (8) von außen her oder außerhalb des Gehäuses (2) ausgebildet ist.

14. Vorrichtung nach einem der drei vorhergehenden Ansprüche, **dadurch gekennzeichnet, dass** die zweite Klappe (15, 17) zum Öffnen für eine Entnahme des Zünders (8) von außerhalb des Gehäuses (2) her durch einen externen Roboterarm oder Manipulator ausgebildet ist.

15. Vorrichtung nach einem der acht vorhergehenden Ansprüche, **dadurch gekennzeichnet, dass** ein Hebel (14) als Sicherung der Lage des entschärften Blindgängers (5') in der Halterung (4) vorgesehen ist, der zum Absenken auf den entschärften Blindgänger (5') für dessen Fixierung zwischen der Halterung (4) und dem Hebel (14) ausgebildet ist.

## Claims

1. Method for defusing a submerged unexploded ordnance (5) with at least one detonator using a housing (2) which can be closed and drained under water, having the steps:
* Fixing the unexploded ordnance (5) in the housing (2),
* locating the at least one detonator (8) on the unexploded ordnance (5), and unexploded ordnance (5), **characterised by** the further steps:
* cutting loose the at least one detonator (8),
* removing the detached detonator (8) from the unexploded ordnance (5) and
unexploded ordnance (5) and
* separating the removed detonator (8) from the remaining unexploded ordnance (5') by
separating the removed detonator (8) from the rest of the unexploded ordnance (5') by moving the detonator (8) removed from the unexploded ordnance (5) into a protected compartment (12) and separating it from the rest of the unexploded ordnance (5') and separating it spatially.

2. Method according to claim 1, **characterised in that**, in the event that an unexploded ordnance (5) has more than one detonator (8), these are cut out of the unexploded ordnance (5) one after the other and removed and placed in separate sections of the protected compartment (12).

3. Method according to the preceding claim, **characterized in that** the detonator (8) taken from the unexploded ordnance (5) is taken from the outside of the protected compartment (12) of the housing (2).

4. Method according to one of the two preceding claims, **characterised in that** the detonator (8) removed from the dummy gear (5) is only removed from the protected compartment (12) of the housing (2) after the housing (2) has been brought to a water surface.

5. A method according to one of the preceding claims, **characterised in that** upon locating the at least one detonator (8) on the dud (5), the position of the dud (5) is set or adjusted by shifting and/or rotating.

6. Method according to the preceding claim, **characterized in that** the adjustment is carried out using an adjustment device in the form of a drive (9) with the unexploded ordnance (5) lying in a holder (4).

7. Device (1) for defusing an unexploded ordnance (5) lying under water with at least one detonator (8), the device (1) comprising a housing (2) which can be closed and drained under water,
* a holder (4) for receiving the unexploded ordnance (5) with position fixing in the housing (2);
* locating means for accurately determining the position of the detonator (8) on the unexploded ordnance (5),
**characterized in that**
the device (1) further comprises
* a manipulator (10) with cutting means for cutting the detonator (8) loose; and
* a gripper for removing and separating the uncut detonator (8) from the rest of the unexploded ordnance (5'), a protected compartment (12) being formed in the housing (2) for receiving the detonator (8) separated from the rest of the unexploded ordnance (5'). the compartment (12) being separable from another interior of the device (1) by means of a resistant and closable flap (13) and being designed to be pressure-stable.

8. Device according to the preceding claim, **characterised in that** compartments (12) are provided which are protected from one another and are separated from one another in order to accommodate a plurality of detonators (8).

9. Device according to one of the two preceding claims, **characterised in that** the compartment (12) is explosion-protected from the rest of the interior of the housing (2) by the flap (13).

10. Device according to one of the three preceding claims, **characterised in that** the protected compartment (12) is designed in the manner of a pressure relief valve.

11. Apparatus according to any one of the four preceding claims, **characterised in that** the protected compartment (12) comprises a second lid formed as a second flap (15).

12. Device according to the preceding claim, **characterised in that** the second flap (15) is held closed in a watertight and airtight manner via a spring-loaded joint (16) on the compartment (12).

13. 1 Device according to one of the two preceding claims, **characterised in that** the second flap (15, 17) is designed to open for removal of the igniter (8) from the outside or outside the housing (2).

14. Device according to any of the three preceding claims, **characterised in that** the second flap (15, 17) is designed to be opened for removal of the igniter (8) from outside the housing (2) by an external robot arm or manipulator.

15. Device according to one of the eight preceding claims, **characterised in that** a lever (14) is provided for securing the position of the disarmed unexploded ordnance (5') in the holder (4), which lever is designed to be lowered onto the disarmed unexploded ordnance (5') for fixing it between the holder (4) and the lever (14).

## Revendications

1. Procédé pour désamorcer une bombe non explosée (5) immergée avec au moins un détonateur en utilisant un boîtier (2) pouvant être fermé et drainé sous l'eau, comprenant les étapes suivantes :
* Fixer la bombe non explosée (5) dans le boîtier (2),
* localisation de l'au moins un détonateur (8) sur l'amorce fictive (5),
**caractérisé par** les étapes supplémentaires suivantes :
* découpe de l'au moins un détonateur (8),
* retrait de l'amorce découpée (8) de l'objet non explosé (5) et
* séparation de l'amorce (8) retirée du reste de la charge non explosée (5'), en amenant l'amorce (8) retirée de la charge non explosée (5) dans un compartiment protégé (12) et en la séparant du reste de la charge non explosée (5') et en la séparant dans l'espace.

2. Procédé selon la revendication 1, **caractérisé en ce que**, dans le cas où une bombe non explosée (5) dispose de plus d'un détonateur (8), ceux-ci sont découpés et retirés de la bombe non explosée (5) les uns après les autres dans le temps et sont placés dans des sections séparées les unes des autres du compartiment protégé (12).

3. Procédé selon la revendication précédente, **caractérisé en ce que** l'amorce (8) retirée de l'obturateur (5) est retirée de l'extérieur du compartiment protégé (12) du boîtier (2).

4. Procédé selon l'une des deux revendications précédentes, **caractérisé en ce que** l'amorce (8) prélevée dans le corps factice (5) n'est prélevée dans le compartiment protégé (12) du boîtier (2) qu'après que le boîtier (2) a été amené à la surface de l'eau.

5. Procédé selon l'une des revendications précédentes, **caractérisé en ce que**, après avoir localisé l'au moins un détonateur (8) sur le raté (5), l'emplacement ou la position du raté (5) est ajusté ou réglé par déplacement et/ou rotation.

6. Procédé selon la revendication précédente, **caractérisé en ce que** l'ajustement est effectué en utilisant un dispositif d'ajustement sous la forme d'un entraînement (9) lorsque l'obturateur (5) est placé dans un support (4) .

7. Dispositif (1) pour désamorcer une bombe non explosée (5) immergée avec au moins un détonateur (8), le dispositif (1) comprenant un boîtier (2) pouvant être fermé et drainé sous l'eau,
* un support (4) destiné à recevoir la bombe non explosée (5) avec fixation de la position dans le boîtier (2) ;
* des moyens de localisation pour déterminer avec précision la position de l'amorce (8) sur le corps factice (5),
**caractérisé en ce que**
le dispositif (1) comprend en outre
* un manipulateur (10) avec des moyens de coupe pour détacher le détonateur (8) et
* un préhenseur pour prélever et séparer l'amorce (8) découpée du reste de la charge non explosée (5'), un compartiment protégé (12) étant formé dans le boîtier (2) pour recevoir l'amorce (8) séparée du reste de la charge non explosée (5'), le compartiment (12) étant réalisé de manière à pouvoir être séparé d'un autre espace intérieur du dispositif (1) par un volet résistant et pouvant être fermé (13) et à résister à la pression.

8. Dispositif selon la revendication précédente, **caractérisé en ce que**, pour recevoir plusieurs détonateurs (8), il est prévu des compartiments (12) protégés les uns des autres, qui sont séparés les uns des autres.

9. Dispositif selon l'une des deux revendications précédentes, **caractérisé en ce que** le compartiment (12) est protégé contre les explosions par le clapet (13) par rapport au reste de l'espace intérieur du boîtier (2).

10. Dispositif selon l'une des trois revendications précédentes, **caractérisé en ce que** le compartiment protégé (12) est du type soupape de surpression.

11. Dispositif selon l'une des quatre revendications précédentes, **caractérisé en ce que** le compartiment protégé (12) comporte un deuxième couvercle qui est conçu comme un deuxième volet (15).

12. Dispositif selon la revendication précédente, **caractérisé en ce que** le deuxième volet (15) est maintenu fermé de manière étanche à l'eau et à l'air par une articulation (16) chargée par ressort sur le compartiment (12).

13. Dispositif selon l'une des deux revendications précédentes, **caractérisé en ce que** la deuxième trappe (15, 17) est configurée pour s'ouvrir en vue d'un retrait de l'allumeur (8) depuis l'extérieur ou à l'extérieur du boîtier (2).

14. Dispositif selon l'une des trois revendications précédentes, **caractérisé en ce que** la deuxième trappe (15, 17) est configurée pour s'ouvrir en vue d'un retrait de l'allumeur (8) depuis l'extérieur du boîtier (2) par un bras robotisé ou un manipulateur externe.

15. Dispositif selon l'une des huit revendications précédentes, **caractérisé en ce qu'**il est prévu un levier (14) pour assurer la position de l'obturateur désamorcé (5') dans le support (4), ce levier étant conçu pour s'abaisser sur l'obturateur désamorcé (5') pour sa fixation entre le support (4) et le levier (14).
